# EUROPEAN PATENT SPECIFICATION

(11) **EP 4 071 423 B1**
(45) Date of publication and mention of the grant of the patent: **25.06.2025**
(21) Application number: 22166463.4
(22) Date of filing: 04.04.2022
(51) Int. Cl.: F24F 13/14, F16K 1/16, F16K 17/36, F24F 13/15, A62C 2/14

(54) **BLAST DAMPER**
SPRENGDÄMPFER
AMORTISSEUR DE SOUFFLE

(30) Priority: 07.04.2021 FI 20215413
(43) Date of publication of application: 12.10.2022
(73) Proprietor: VG Innovations S.à r.l., 2146 Luxembourg (LU)
(72) Inventor: Niemi, Timo, 00880 Helsinki (FI); Lahtinen, Osmo, 00880 Helsinki (FI)
(74) Representative: Boco IP Oy Ab

(56) References cited:
- EP-A1- 3 564 597
- WO-A1-2016/142577
- WO-A2-2004/053272
- CN-A- 110 715 086
- GB-A- 2 540 356
- US-A- 4 372 342
- US-A- 4 518 012

## Description

### Field of the invention

The invention relates to a blast damper as defined in the preamble of independent claim 1.

In petrochemical plants, oil-drilling rigs, process industry plants and other corresponding plants, it is necessary to safeguard against sudden and high pressure loads caused by explosions, sudden fires, or the like. Ventilation systems are safeguarded against such pressure loads by installing in them pressure valves or blast dampers that close automatically when a pressure load of the above-mentioned type is directed to them. Pressure valves of this type may also be installed at a desired location in a ventilation shaft or directly inside or outside a pressure load-resistant wall in connection with a ventilation shaft. Prior art pressure valves comprise plate-like closing blades arranged on turning axles. Normally, there are two or more axles in a pressure valve and they extend parallel at a distance from each other across a flow channel formed by the pressure valve, through which air or some other flowing medium flows through the pressure valve. One or more closing blades may be installed next to each other on one axle. In a normal operating mode, the closing blades are in an open position that allows air or some other flowing medium to flow through the closing blades and the pressure valve. Thus, in the open position, the closing blades are set in the flow direction of the air flowing through the pressure valve or at an angle relative to the flow direction.

Publication US 5,425,673 presents a fire closure shutter. CN110715086 and EP3564597 each discloses a blast damper corresponding to the preamble of claim 1.

### Objective of the invention

The object of the invention is to provide a blast damper having closing blades capable of automatically move into a closed position in response to a pressure increase sensed by at least one of the closing blades and capable of automatically move into an open position so that the open position can be selected to achieve a selected flow of air through a flow channel of the blast damper.

### Short description of the invention

The blast damper of the invention is characterized by the definitions of independent claim 1.

Some embodiments of the blast damper are presented in the dependent claims.

### List of figures

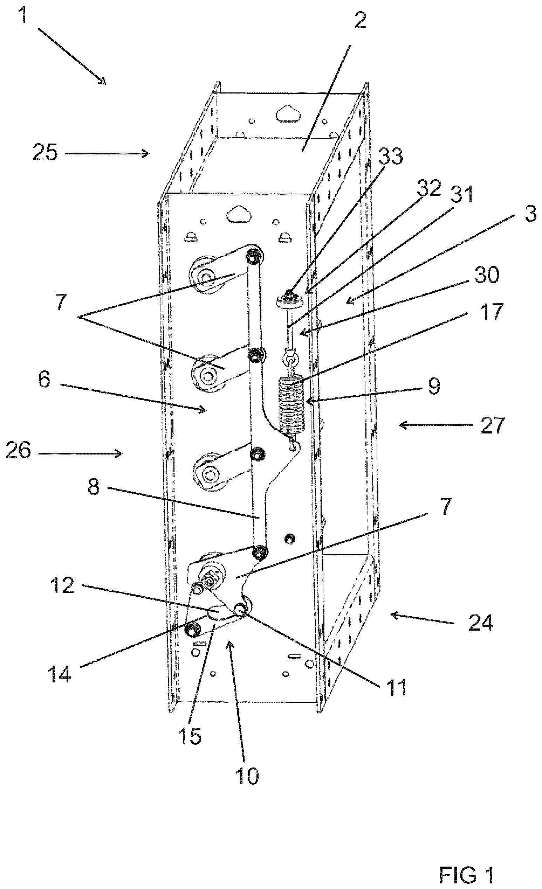

In the following the invention will described in more detail by referring to the figures of which
Figure 1 shows an embodiment of the blast damper in a state where the closing blades are in an open position and where the actuating mechanism is in an opening position,

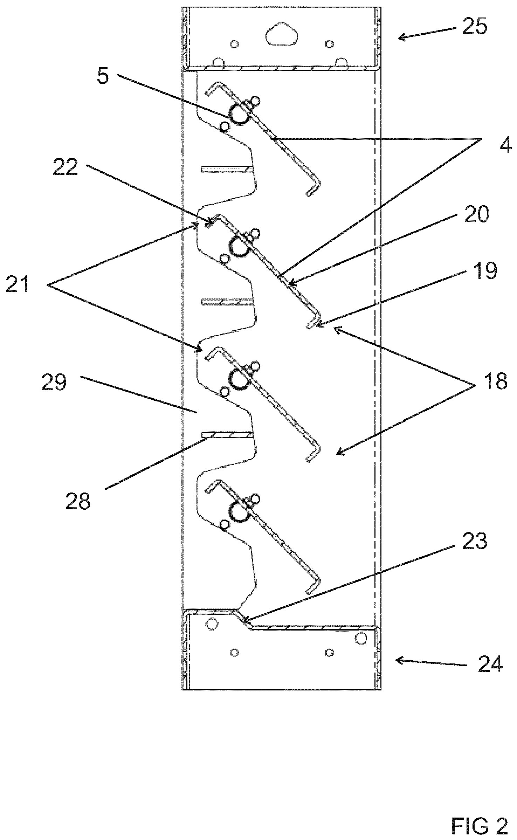

Figure 2 shows in section view the embodiment of the blast damper shown in figure 1 in a state where the closing blades are in an open position,

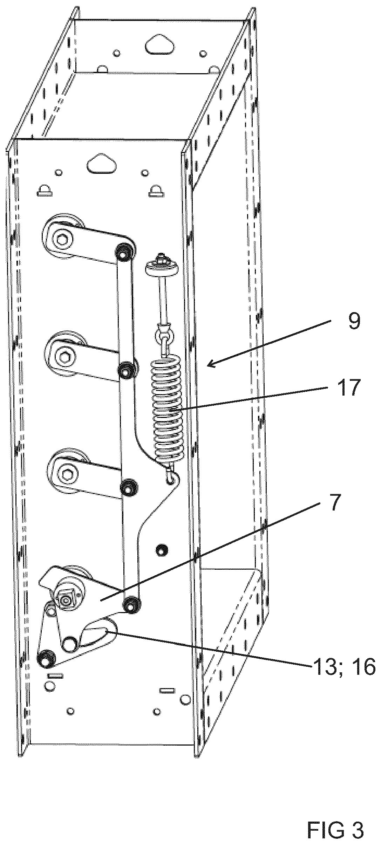

Figure 3 shows the embodiment of the blast damper in a state where the closing blades are in a closed position and where the actuating mechanism is in a closing position, and

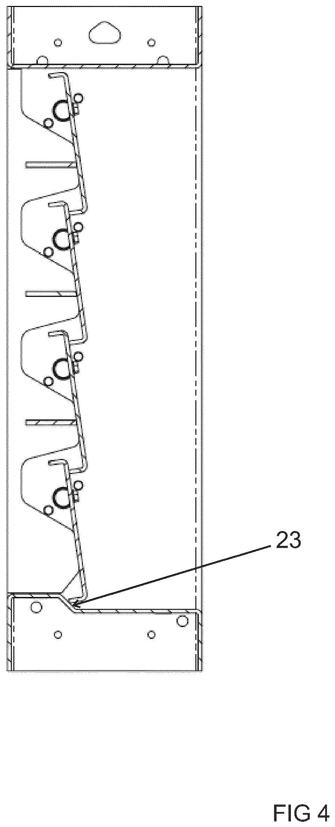

Figure 4 shows in section view the embodiment of the blast damper shown in figure 1 in a state where the closing blades are in a closed position.

### Detailed description of the invention

Next the blast damper 1 and some embodiments and variants of the blast damper 1 will be described in greater detail.

The blast damper 1 comprises a frame 2 defining a flow channel 3 for air flow through the blast damper 1.

The blast damper 1 comprises closing blades 4 pivotally arranged in the flow channel 3, wherein each closing blade 4 can be pivoted about a pivot axis (not marked with a reference numeral) between a closed position and an open position and wherein each closing blade 4 is pivotally supported at the frame 2 by means of shaft means 5. The pivot axes of the closing blades 4 are preferably, but not necessarily, essentially parallel.

The blast damper 1 comprises an actuating mechanism 6 comprising turning levers 7. One turning lever 7 is fixed to the shaft means 5 of each closing blade 4 and a common operating lever 8 is turnably fixed to each turning lever 7 such that the closing blades 4 are configured to simultaneously pivot between the closed position so as to prevent air flow through the blast damper 1 and so that the actuating mechanism 6 takes a closing position in the closed position of the closing blades 4, and the open position so as to allow air flow through the blast damper 1 and so that the actuating mechanism 6 takes an opening position in the open position of the closing blades 4.

The blast damper 1 comprises an energy storing device 9 functionally connected to the actuating mechanism 6.

The closing blades 4 are configured to pivot into the closed position in response to a pressure increase in the flow channel 3 sensed by at least one of the closing blades 4. The closing blades 4 are preferably, but not necessarily, configured to pivot into the closed position in response to a pressure increase exceeding a threshold value in the flow channel 3 sensed by at least one of the closing blades 4.

The energy storing device 9 is configured to be loaded with energy when the closing blades 4 pivots into the closed position, wherein said energy loaded to the energy storing device 9 is configured urge the closing blades 4 into the open position from the closed position. The blast damper 1 functions in this way automatically, which means that there is no need to for example manually move the closing blades 4 to the open position or to provide the blast damper 1 for example with a remotely operated triggering device (not illustrated in the figures) for moving the closing blades 4 to the open position. This makes the blast damper 1 easy to use and makes it technically simple.

The blast damper 1 comprises an adjustable stopper mechanism 10 functionally connected to the actuating mechanism 6 for setting the opening position of the actuating mechanism 6. Because the adjustable stopper mechanism 10 is functionally connected to the actuating mechanism 6 it is in this way possible to adjust the angle the closing blades 4 takes in the flow channel 3 in the opening position of the actuating mechanism 6 and consequently possible to adjust the air flow through the flow channel 3 in the opening position of the actuating mechanism 6.

The adjustable stopper mechanism 10 is preferably, but not necessarily, functionally connected to the actuating mechanism 6 by being configured to abut a first movement limiter 16 of the adjustable stopper mechanism 10 in the opening position of the actuating mechanism 6. When the closing blades 4 pivots from the open position to the closed position and the actuating mechanism 6 correspondingly moves from the opening position to the closing position, the actuating mechanism 6 is configured to move apart from the first movement limiter 16 of the adjustable stopper mechanism 10.

The adjustable stopper mechanism 10 comprises preferably, but not necessarily, as illustrated in the figures, an elongated opening 12 and a pin member 11 that is configured to move in the elongated opening 12. In such case, the first movement limiter 16 of the adjustable stopper mechanism 10 is formed by a first end 13 of the elongated opening 12 and the pin member 11 is configured to abut the first end 13 of the elongated opening 12 in the opening position of the actuating mechanism 6. In such case the pin member 11 of the adjustable stopper mechanism 10 is configured to move in a direction towards a second end 14 of the elongated opening 12 of the adjustable stopper mechanism 10 when the closing blades 4 pivots to the open position. In such case, the pin member 11 and/or the elongated opening 12 is adjustable arranged with respect to the frame 2 so as to enable to set the opening position of the actuating mechanism 6. In such case, the pin member 11 and/or the elongated opening 12 is more preferably adjustable attached with respect to the frame 2 so as to enable to set the opening position of the actuating mechanism 6.In other words, by adjusting the position of at least one of the pin member 11 and the elongated opening 12, it is possible to adjust the position where the pin member 11 abuts the first end 13 of the elongated opening 12 and to adjust the angle the closing blades 4 takes in the flow channel 3 in the opening position of the actuating mechanism 6. The pin member 11 of the adjustable stopper mechanism 10 is preferably, but not necessarily, configured to be spaced apart from the second end 14 of the elongated opening 12 in the closing position of the actuating mechanism 6. This to ensure compete closing of the flow channel 3 by means of the closing blades 4 by preventing that the pin member 11 abuts the second end 14 of the elongated opening 12 before the closing blades 4 simultaneously pivots to the closed position and closes and prevents air flow through the blast damper 1.

If the adjustable stopper mechanism 10 comprises an elongated opening 12 and a pin member 11, the actuating mechanism 6 is preferably, but not necessarily, provided with the pin member 11 of the adjustable stopper mechanism 10 and the elongated opening 12 of the stopper mechanism 10 is preferably, but not necessarily, provided in an adjustable stopper member 15 that is adjustable provided at the blast damper 1. In such case one of the turning levers 7 of the actuating mechanism 6 is preferably, but not necessarily, as illustrated in the figures, provided with the pin member 11 of the adjustable stopper mechanism 10. In such case, the adjustable stopper member 15 is preferably, but not necessarily, as illustrated in the figures, adjustable attached to the frame 2.

The energy storing device 9 is preferably, but not necessarily, a spring 17 that is functionally connected between the frame 2 and the actuating mechanism 6. The spring 17 is preferably, but not necessarily, a tension spring that is configured to be loaded with energy i.e. to extend when the closing blades 4 pivots from the open position into the closed position. Other spring types can also be used.

If the energy storing device 9 is a spring 17 in the form of a tension spring, a spring preload adjuster 30 is preferably, but not necessarily, provided to allow to adjust the preload of the tension spring. The spring preload adjuster 30 can be configured to adjust the preload of the tension spring by adjusting the length the tension spring has in the opening position of the actuating mechanism 6 i.e. to adjust the length the tension spring has when the closing blades 4 are in the open position. The effect of this is that the more the tension spring is preloaded in other words extended, the more the tension spring will restrict further extension of the tension spring. Because the tension spring is functionally connected between the frame 2 and the actuating mechanism 6, the pressure increase in the flow channel 3 sensed by at least one of the closing blades and required to move the closing blades 4 into the closed position so as to prevent air flow through the blast damper 1 will raise when the preload of the tension spring is increased. Additionally, the tension spring will more effectively, in other words, with a greater force urge the closing blades 4 into the open position. In the figures the spring preload adjuster 30 is provided between the frame and the tension spring. Alternatively the spring preload adjuster 30 could be provided between the actuating mechanism 6 and the tension spring. The spring preload adjuster 30 can for example comprise a threaded pin 31 that is held in a hole 32 at the frame 6 by means of a nut 33 threaded on the threaded pin 31 and that is attached to the tension spring so that by turning the threaded pin 31 and the nut 33 with respect to each other, the position of the threaded bar 31 with respect to the frame 2 will change and the preloading of the tension spring will change because the length of the tension spring change.

The energy storing device 9 is preferably, but not necessarily, as illustrated in the figures, a spring 17 that is functionally connected between the frame 2 and the common operating lever 8 of the actuating mechanism 6. The spring 17 is preferably, but not necessarily, a tension spring.

The frame 2 comprises preferably, but not necessarily, a first profile section 24, a second profile section 25 that is parallel with the first profile section 24, a third profile section 26, and a fourth profile section 27 that is parallel with the third profile section 26 so that the first profile section 24 and the second profile section 25 extend in parallel with the pivot axes of the closing blades 4, and so that the first profile section 24, the second profile section 25, the third profile section 26, and the fourth profile section 27 together limits the flow channel 3.

Each closing blade 4 have preferably, but not necessarily, a leading edge 18 provided with a leading end section 19 that extends perpendicularly to a middle section 20 of the closing and a trailing edge 21 provided with a trailing end section 22 that extends perpendicularly to the middle section 20 of the closing blades 4 so that the closing blades 4 have an U-shaped cross-section form. If the frame 2 comprises, a first profile section 24, a second profile section 25 that is parallel with the first profile section 24, a third profile section 26, and a fourth profile section 27 that is parallel with the third profile section 26 so that the first profile section 24 and the second profile section 25 extend in parallel with the pivot axes of the closing blades 4, and so that the first profile section 24, the second profile section 25, the third profile section 26, and the fourth profile section 27 together limits the flow channel 3 and if each closing blade 4 have a leading edge 18 provided with a leading end section 19 that extends perpendicularly to a middle section 20 of the closing and a trailing edge 21 provided with a trailing end section 22 that extends perpendicularly to the middle section 20 of the closing blades 4 so that the closing blades 4 have an U-shaped cross-section form, the closing blades 4 are preferably, but not necessarily, dimensioned so that when each closing blade 4 is in the closed position, the leading end section of the closing blade 4 settles against the middle section of the adjacent closing blade 4 and so that the leading end section of the closing blade 4 closest to the first profile section 24 of the frame 2 settle against the first profile section 24 of the frame 2, and so that the trailing end section of the closing blade 4 closest to the second profile section 25 of the frame 2 settle against the second profile section 25 of the frame 2.

In the blast damper 1 illustrated in the figures, the first profile section 24 of the frame 2 has a step formation 23 and the leading end section of the closing blade 4 closest to the first profile section 24 of the frame 2 settle against the step formation of the first profile section 24 of the frame 2. Provision of such leading end section and of such trailing end section makes the closing blades 4 stiffer and makes the closing blades 4 to more securely close the flow channel 3 in the closed position.

In the flow channel 3 can flow controllers 28 be provided between two adjacent closing blades 4, as illustrated in the figures. In the figures, the flow controllers 28 extend between the third profile section 26 and the fourth profile section 27 essentially parallel to the flow channel 3 and to the flow direction of the blast damper 1 and essentially perpendicularly to the third profile section 26 of the frame 2 and to the fourth profile section 27 of the frame 2 and essentially in parallel with the first profile section 24 of the frame 2 and the second profile section 25 of the frame 2. A support 29 for the flow controllers 28 can be provided essentially in the middle of the flow channel 3. The support 29 can, as illustrated in the figures, extend between the first profile section 24 and the second profile section 25 essentially parallel to the flow channel 3 and to the flow direction of the blast damper 1 and essentially perpendicularly to the first profile section 24 of the frame 2 and to the second profile section 25 of the frame 2 and essentially in parallel with the third profile section 26 of the frame 2 and with the fourth profile section 27 of the frame 2. The closing blades 4 can be dimensioned so, as illustrated in the figures, that when each closing blade 4 is in the closed position, the middle section of the closing blades 4, except for the middle section of the closing blade 4 closest to the first profile section 24 of the frame 2 settle against the flow controllers 28. It is apparent to a person skilled in the art that as technology advances, the basic idea of the invention can be implemented in various ways, within the scope of the claims.

The invention and its embodiments are therefore not restricted to the above examples, but they may vary within the scope of the claims.

## Claims

1. A blast damper (1) comprising
a frame (2) defining a flow channel (3) for air flow through the blast damper (1),
closing blades (4) pivotally arranged in the flow channel (3), wherein each closing blade (4) can be pivoted about a pivot axis between a closed position and an open position and wherein each closing blade (4) is pivotally supported at the frame (2) by means of shaft means (5),
an actuating mechanism (6) comprising turning levers (7) so that one turning lever (7) is fixed to shaft means (5) of each closing blade (4) and a common operating lever (8) is turnably fixed to each turning lever (7) such that the closing blades (4) are configured to simultaneously pivot between the closed position so as to prevent air flow through the blast damper (1) and so that the actuating mechanism (6) takes a closing position, and the open position so as to allow air flow through the blast damper (1) and so that the actuating mechanism (6) takes an opening position, and
an energy storing device (9) functionally connected to the actuating mechanism (6),
wherein the closing blades (4) are configured to move into the closed position in response to a pressure increase in the flow channel (3) sensed by at least one of the closing blades (4),
whereby
the energy storing device (9) is configured to be loaded with energy when the closing blades (4) pivots into the closed position, wherein said energy loaded to the energy storing device (9) is configured to urge the closing blades (4) into the open position, **characterized**
**by** an adjustable stopper mechanism (10) functionally connected to the actuating mechanism (6) for setting the opening position of the actuating mechanism (6).

2. The blast damper (1) according to claim 1, **characterized**
**by** the adjustable stopper mechanism (10) being functionally connected to the actuating mechanism (6) by the actuating mechanism (6) being configured to abut a first movement limiter (16) of the adjustable stopper mechanism (10) in the opening position of the actuating mechanism (6).

3. The blast damper (1) according to claim 2, **characterized**
**by** the adjustable stopper mechanism (10) comprising an elongated opening (12) and a pin member (11) that is configured to move in the elongated opening (12),
by the first movement limiter (16) of the adjustable stopper mechanism (10) is formed by a first end (13) of the elongated opening (12), wherein the pin member (11) is configured to abut the first end (13) of the elongated opening (12) in the opening position of the actuating mechanism (6),
by the pin member (11) of the adjustable stopper mechanism (10) is configured to move in a direction towards a second end (14) of the elongated opening (12) of the adjustable stopper mechanism (10) when the closing blades (4) pivot to the open position, and
by at least one of the pin member (11) and the elongated opening (12) being adjustable arranged with respect to the frame (2).

4. The blast damper (1) according to claim 3, **characterized**
**by** the pin member (11) of the adjustable stopper mechanism (10) is configured to be spaced apart from the second end (14) of the elongated opening (12) in the closing position of the actuating mechanism (6).

5. The blast damper (1) according to claim 3 or 4, **characterized**
**by** the actuating mechanism (6) being provided with the pin member (11) of the adjustable stopper mechanism (10), and
by the elongated opening (12) of the stopper mechanism (10) being provided in an adjustable stopper member (15) that is adjustable provided at the blast damper (1).

6. The blast damper (1) according to claim 5, **characterized**
**by** one of the turning levers (7) of the actuating mechanism (6) being provided with the pin member (11) of the adjustable stopper mechanism (10).

7. The blast damper (1) according to claim 5 or 6, **characterized**
**by** the adjustable stopper member (15) being adjustable attached to the frame (2).

8. The blast damper (1) according to any of the claims 1 to 7, **characterized**
**by** the energy storing device (9) being a spring (17) that is functionally connected between the frame (2) and the actuating mechanism (6).

9. The blast damper (1) according to any of the claims 1 to 8, **characterized**
**by** the energy storing device (9) being a spring (17) that is functionally connected between the frame (2) and the common operating lever (8) of the actuating mechanism (6).

10. The blast damper (1) according to claim 8 or 9, **characterized**
**by** the spring (17) being a tension spring.

11. The blast damper (1) according to claim 10, **characterized**
**by** a spring preload adjuster (30) for adjusting a preload that the tension spring has in the opening position of the actuating mechanism (6).

## Patentansprüche

1. Explosionsschutzklappe (1) umfassend
einen Rahmen (2), der einen Strömungskanal (3) für eine Luftströmung durch die Explosionsschutzklappe (1) definiert,
im Strömungskanal (3) schwenkbar angeordnete Verschlusslamellen (4), wobei jede Verschlusslamelle (4) um eine Schwenkachse zwischen einer geschlossenen Stellung und einer offenen Stellung geschwenkt werden kann, und wobei jede Verschlusslamelle (4) über ein Achsmittel (5) am Rahmen (2) schwenkbar gelagert ist,
einen Stellmechanismus (6), der Drehhebel (7) dergestalt umfasst, dass ein Drehhebel (7) am Achsmittel (5) jeder Verschlusslamelle (4) befestigt ist und ein gemeinsamer Bedienhebel (8) an jedem Drehhebel (7) drehbar befestigt ist, so dass die Verschlusslamellen (4) ausgelegt sind zum gleichzeitigen Schwenken zwischen der geschlossenen Stellung, damit eine Luftströmung durch die Explosionsschutzklappe (1) verhindert wird und so der Stellmechanismus (6) eine Schließstellung einnimmt, und der offenen Stellung, damit eine Luftströmung durch die Explosionsschutzklappe (1) gestattet wird und so der Stellmechanismus (6) eine Öffnungsstellung einnimmt, und
eine mit dem Stellmechanismus (6) funktionswirksam verbundene Energiespeichervorrichtung (9),
wobei die Verschlusslamellen (4) dazu ausgelegt sind, sich in Reaktion auf eine durch mindestens eine der Verschlusslamellen (4) im Strömungskanal (3) erfasste Druckerhöhung in die geschlossene Stellung bewegen,
wobei die Energiespeichervorrichtung (9) so ausgelegt ist, dass sie mit Energie geladen wird, wenn sich die Verschlusslamellen (4) in die geschlossene Stellung schwenken, wobei die in die Energiespeichervorrichtung (9) geladene Energie dazu ausgelegt ist, die Verschlusslamellen (4) in die offene Stellung zu zwingen,
**gekennzeichnet**
**durch** einen mit dem Stellmechanismus (6) funktionswirksam verbundenen verstellbaren Stoppermechanismus (10) zum Einstellen der Öffnungsposition des Stellmechanismus (6).

2. Explosionsschutzklappe (1) nach Anspruch 1, **gekennzeichnet**
**dadurch, dass** der verstellbare Stoppermechanismus (10) mit dem Stellmechanismus (6) funktionswirksam verbunden ist, wobei der Stellmechanismus (6) dazu ausgelegt ist, in der Öffnungsstellung des Stellmechanismus (6) an einen ersten Bewegungsbegrenzer (16) des verstellbaren Stoppermechanismus (10) anzustoßen.

3. Explosionsschutzklappe (1) nach Anspruch 2, **gekennzeichnet**
**dadurch, dass** der verstellbare Stoppermechanismus (10) eine längliche Öffnung (12) und ein Stiftelement (11), das dazu ausgelegt ist, sich in der länglichen Öffnung (12) zu bewegen, aufweist,
dadurch, dass der erste Bewegungsbegrenzer (16) des verstellbaren Stoppermechanismus (10) durch ein erstes Ende (13) der länglichen Öffnung (12) ausgebildet ist, wobei das Stiftelement (11) dazu ausgelegt ist, in der Öffnungsstellung des Stellmechanismus (6) an das erste Ende (13) der länglichen Öffnung (12) anzustoßen,
dadurch, dass das Stiftelement (11) des verstellbaren Stoppermechanismus (10) dazu ausgelegt ist, sich in eine Richtung hin zu einem zweiten Ende (14) der länglichen Öffnung (12) des verstellbaren Stoppermechanismus (10) zu bewegen, wenn die Verschlusslamellen (4) in die offene Stellung schwenken, und
dadurch, dass das Stiftelement (11) und/oder die längliche Öffnung (12) in Bezug zum Rahmen (2) verstellbar eingerichtet ist.

4. Explosionsschutzklappe (1) nach Anspruch 3, **gekennzeichnet**
**dadurch, dass** das Stiftelement (11) des verstellbaren Stoppermechanismus (10) so ausgelegt ist, dass es in der Schließstellung des Stellmechanismus (6) zum zweiten Ende (14) der länglichen Öffnung (12) beabstandet ist.

5. Explosionsschutzklappe (1) nach Anspruch 3 oder 4, **gekennzeichnet**
**dadurch, dass** der Stellmechanismus (6) mit dem Stiftelement (11) des verstellbaren Stoppermechanismus (10) versehen ist, und
dadurch, dass die längliche Öffnung (12) des Stoppermechanismus (10) in einem verstellbaren Stopperelement (15) vorgesehen ist, das an der Explosionsschutzklappe (1) verstellbar vorgesehen ist.

6. Explosionsschutzklappe (1) nach Anspruch 5, **gekennzeichnet**
**dadurch, dass** einer der Drehhebel (7) des Stellmechanismus (6) mit dem Stiftelement (11) des verstellbaren Stoppermechanismus (10) versehen ist.

7. Explosionsschutzklappe (1) nach Anspruch 5 oder 6, **gekennzeichnet**
**dadurch, dass** das verstellbare Stopperelement (15) verstellbar am Rahmen (2) angebracht ist.

8. Explosionsschutzklappe (1) nach einem der Ansprüche 1 bis 7, **gekennzeichnet**
**dadurch, dass** es sich bei der Energiespeichervorrichtung (9) um eine Feder (17) handelt, die funktionswirksam zwischen dem Rahmen (2) und dem Stellmechanismus (6) verbunden ist.

9. Explosionsschutzklappe (1) nach einem der Ansprüche 1 bis 8, **gekennzeichnet**
**dadurch, dass** es sich bei der Energiespeichervorrichtung (9) um eine Feder (17) handelt, die funktionswirksam zwischen dem Rahmen (2) und dem gemeinsamen Bedienhebel (8) des Stellmechanismus (6) verbunden ist.

10. Explosionsschutzklappe (1) nach Anspruch 8 oder 9, **gekennzeichnet**
**dadurch, dass** die Feder (17) eine Spannfeder ist.

11. Explosionsschutzklappe (1) nach Anspruch 10, **gekennzeichnet**
**durch** einen Federvorspannungsversteller (30) zum Verstellen einer Vorspannung, die die Spannfeder in der Öffnungsstellung des Stellmechanismus (6) aufweist.

## Revendications

1. Clapet anti-souffle (1) comprenant
un cadre (2) définissant un canal d'écoulement (3) pour un flux d'air à travers le clapet anti-souffle (1),
des lames de fermeture (4) disposées de manière pivotante dans le canal d'écoulement (3), chaque lame de fermeture (4) pouvant être pivotée autour d'un axe de pivotement entre une position fermée et une position ouverte, et chaque lame de fermeture (4) étant logée de manière pivotante sur le cadre (2) moyennant des moyens d'axe (5),
un mécanisme d'actionnement (6) comprenant des leviers tournants (7) de sorte qu'un levier tournant (7) est attaché au moyen d'axe (5) de chaque lame de fermeture (4) et un levier de commande commun (8) est attaché de manière rotative à chaque levier tournant (7) de sorte que les lames de fermeture (4) sont configurées pour pivoter simultanément entre la position fermée de manière à empêcher un flux d'air à travers le clapet anti-souffle (1) et de sorte que le mécanisme d'actionnement (6) prenne une position de fermeture et la position ouverte de manière à autoriser un flux d'air à travers le clapet anti-souffle (1) et de sorte que le mécanisme d'actionnement (6) prenne une position d'ouverture, et
un dispositif de stockage d'énergie (9) relié de manière fonctionnelle au mécanisme d'actionnement (6),
dans lequel les lames de fermeture (4) sont configurées pour se déplacer dans la position fermée en réaction à une augmentation de pression détectée dans le canal d'écoulement (3) par au moins une des lames de fermeture (4),
dans lequel le dispositif de stockage d'énergie (9) est configuré pour être chargé d'énergie lorsque les lames de fermeture (4) pivotent dans la position fermée, l'énergie chargée dans le dispositif de stockage d'énergie (9) étant configurée pour forcer les lames de fermeture (4) dans la position ouverte,
**caractérisé**
**par** un mécanisme de butée réglable (10) relié de manière fonctionnelle au mécanisme d'actionnement (6) pour régler la position d'ouverture du mécanisme d'actionnement (6).

2. Clapet anti-souffle (1) selon la revendication 1, **caractérisé**
**en ce que** le mécanisme de butée (10) est relié de manière fonctionnelle au mécanisme d'actionnement (6), le mécanisme d'actionnement (6) étant configuré pour buter, dans la position d'ouverture du mécanisme d'actionnement (6), contre un premier limiteur de mouvement (16) du mécanisme de butée réglable (10).

3. Clapet anti-souffle (1) selon la revendication 2, **caractérisé**
**en ce que** le mécanisme de butée réglable (10) comprend une ouverture oblongue (12) et un élément de goujon (11) qui est configuré pour se déplacer dans l'ouverture oblongue (12),
**en ce que** le premier limiteur de mouvement (16) du mécanisme de butée réglable (10) est formé par une première extrémité (13) de l'ouverture oblongue (12), ledit élément de goujon (11) étant configuré pour buter, dans la position d'ouverture du mécanisme d'actionnement (6), contre la première extrémité (13) de l'ouverture oblongue (12),
**en ce que** l'élément de goujon (11) du mécanisme de butée réglable (10) est configuré pour se déplacer dans une direction vers une seconde extrémité (14) de l'ouverture oblongue (12) du mécanisme de butée réglable (10), lorsque les lamelles de fermeture (4) pivotent dans la position ouverte, et
**en ce qu'**au moins un parmi l'élément de goujon (11) et l'ouverture oblongue (12) est disposé de manière réglable par rapport au cadre (2).

4. Clapet anti-souffle (1) selon la revendication 3, **caractérisé**
**en ce que** l'élément de goujon (11) du mécanisme de butée réglable (10) est configuré pour être espacé de la seconde extrémité (14) de l'ouverture oblongue (12) dans la position de fermeture du mécanisme d'actionnement (6).

5. Clapet anti-souffle (1) selon la revendication 3 ou 4, **caractérisé**
**en ce que** le mécanisme d'actionnement (6) est pourvu de l'élément de goujon (11) du mécanisme de butée réglable (10), et
**en ce que** l'ouverture oblongue (12) du mécanisme de butée (10) est prévue dans un élément butoir réglable (15) qui est prévu de manière réglable au clapet anti-souffle (1).

6. Clapet anti-souffle (1) selon la revendication 5, **caractérisé**
**en ce que** l'un des leviers tournants (7) du mécanisme d'actionnement (6) est pourvu de l'élément de goujon (11) du mécanisme de butée réglable (10).

7. Clapet anti-souffle (1) selon la revendication 5 ou 6, **caractérisé**
**en ce que** l'élément butoir réglable (15) est attaché de manière réglable au cadre (2).

8. Clapet anti-souffle (1) selon l'une des revendications 1 à 7, **caractérisé**
**en ce que** le dispositif de stockage d'énergie (9) est un ressort (17) qui est relié de manière fonctionnelle entre le cadre (2) et le mécanisme d'actionnement (6).

9. Clapet anti-souffle (1) selon l'une des revendications 1 à 8, **caractérisé**
**en ce que** le dispositif de stockage d'énergie (9) est un ressort (17) qui est relié de manière fonctionnelle entre le cadre (2) et le levier de commande commun (8) du mécanisme d'actionnement (6).

10. Clapet anti-souffle (1) selon la revendication 8 ou 9, **caractérisé**
**en ce que** le ressort (17) est un ressort de tension.

11. Clapet anti-souffle (1) selon la revendication 10, **caractérisé**
**par** un régulateur de précharge de ressort (30) pour régler une précharge que le ressort de tension a dans la position d'ouverture du mécanisme d'actionnement (6).
